Europäisches Patentamt

European Patent Office

Office européen des brevets

(19)

(11) Numéro de publication: **0 272 190**
**A1**

(12)

# DEMANDE DE BREVET EUROPEEN

(21) Numéro de dépôt: **87402922.6**

(22) Date de dépôt: **18.12.87**

(51) Int. Cl.4: **C09D 5/10** , **C23F 13/02**

(30) Priorité: **18.12.86 FR 8617742**

(43) Date de publication de la demande:
**22.06.88 Bulletin 88/25**

(84) Etats contractants désignés:
**BE DE GB**

(71) Demandeur: **Barre, Maurice**
**41 avenue de Chartres**
**F-28570 Abondant(FR)**

Demandeur: **Kalewicz, Zdzislaw**
**45 rue Perronet**
**F-92200 Neuilly-sur-Seine(FR)**

(72) Inventeur: **Barre, Maurice**
**41 avenue de Chartres**
**F-28570 Abondant(FR)**
Inventeur: **Kalewicz, Zdzislaw**
**45 rue Perronet**
**F-92200 Neuilly-sur-Seine(FR)**

(74) Mandataire: **Bonnetat, Christian et al**
**Cabinet PROPI Conseils 23 rue de Léningrad**
**F-75008 Paris(FR)**

(54) **Pigment cathodique destiné à la protection de surfaces métalliques contre la corrosion et son procédé de préparation.**

(57) -L'invention concerne un pigment composite destiné à la protection de surfaces métalliques contre la corrosion et son procédé de préparation.

-Chaque particule de pigment comporte un noyau d'un composé électriquement conducteur, notamment un métal, sel de métal ou alliage revêtu d'une couche superficielle d'un métal anodique tel que le zinc et la particule est traitée chimiquement dans un bain contenant un produit actif choisi parmi les sels de chrome hexavalent, les sels de fluor, d'azote de bore, ou un produit issu de la réaction entre l'aminotriazole et l'anhydride de l'acide hydrocarbil succinique, la couche superficielle du pigment étant ainsi rendue émettrice d'électrons.

EP 0 272 190 A1

## Pigment composite destiné à la protection de surfaces métalliques contre la corrosion et son procédé de préparation.

La présente invention concerne des développements au pigment décrit et revendiqué aux termes du brevet OEB 85401102.0 ; le pigment selon le brevet cité étant constitué de particules comportant un noyau en matériau conducteur et de préférence métallique, le noyau étant revêtu d'une couch superficielle d'enrobage d'un métal anodique tel que le zinc.

On a décrit au brevet cité les avantages de ce pigment composite donc les particules unitaires comportent un noyau d'une part et une surface d'enrobage d'autre part, et qui permet d'obtenir des résultats considérablement améliorés dans la protection cathodique des surfaces contre la corrosion notamment des surfaces métalliques et plus spécialement des surfaces en fer et acier.

Outre un rendement considérablement amélioré le pigment selon le brevet principal présente des avantages sur le plan de la rentabilité économique car il permet d'utiliser, pour constituer le noyau des particules pigmentaires, un matériau conducteur électríquement de faible prix de revient.

Il est ainsi possible selon le brevet cité de réaliser un pigment particulièrement efficace pour la protection et le revêtement d'une surface métallique, après incorporation du pigment dans un liant approprié, à partir d'un pourcentage (dans la composition du pigment) limité à un taux de l'ordre de 25 % d'un métal riche common le zinc, le reste de la composition étant fourni par un produit métallique bon marché tel que des particules de fer ou alliage de fer.

Etant précisé que· dans tous les cas le fer ou alliage de fer constitue le noyau des particules pigmentaires dont la surface est constituée par un enrobage de zinc, le tout étant obtenu par broyage.

La présente invention concerne des développements à la technique et aux produits pigmentaires prévus au brevet cité, développement qui améliore considérablement l'efficacité et la durabilité d'action du produit.

Les demandeurs ont en effet constaté que le pigment selon le brevet cité et obtenu par un procédé physique de broyage, aboutissant à un enrobage d'un noyau d'un métal bon marché (tel que le fer) par un métal anodique (tel que le zinc), pouvait être amélioré par un traitement chimique ultérieur aboutissant à une stabilisation de l'enrobage et à une passivation électrochimique permettant d'améliorer l'action anodique de l'enrobage de protection constituant l'élément actif du pigment selon l'invention.

Et la présente invention concerne donc des développements au Brevet cité portant sur le pigment du type spécifié amélioré dans son efficacité et sa durabilité d'action par un traitement chimique suivant le traitement physique d'enrobage.

A cet effet, l'invention concerne un pigment pour la protection de surfaces métalliques contre la corrosion et apte à être incorporé dans un liant tel qu'à base d'une résine synthétique ou naturelle, pour être appliqué en film à la surface de la paroi métallique à protéger, et le pigment est constitué selon la revendication de la présente invention par des particules comportant chacune un noyau choisi parmi des composés électriquement conducteurs notamment les métaux, leurs sels ou leurs alliages, tels que les carbure, phosphure, nitrure, borure, siliciure, ou alliage de métaux tels que le fer, cobalt, nickel, molybdène, titane, chrome, zirconium, vanandium, tungstène, thorium, tantale, cadmium, le noyau étant revêtu d'une couche d'enrobage constituée d'un métal anodique tel que le zinc, et le pigment est caractérisé en ce que ladite couche d'enrobage a subi un traitement de passivation par immersion dans un réactif chimique en phase liquid, et tel que ladite couche d'enrobage devient émettrice d'électrons.

Selon un autre caractéristique, le noyau des pigments peut recevoir une couche d'enrobage superficielle de métaux choisis dans la famille comportant le magnésium, l'aluminium, le zinc, le chrome, le plomb, le cuivre ou l'argent, réalisant une couche d'enrobage interpénétrant, par diffusion ionique, avec la surface du noyau.

Selon un autre caractéristique importante de l'invention, le réactif utilisé pour le traitement des particules pigmentaires est choisi dans la famille comportant des sels de chrome hexavalent.

Alternativement les réactifs chimiques en vue du traitement de la surface d'enrobage des particules pigmentaires sont choisis dans la famille comportant les sels de fluor, d'azote ou de bore.

Selon un exemple de réalisation particulièrement avantageuz, le pigment selon l'invention comporte un noyau de plomb métallique finement broyé, de granulométrie comprise entre 1 et 50 microns, et enrobé par le zinc, le pigment ainsi réalisé ayant été traité par un réactif chimique choisi dans la famille comportant les sels de chrome hexavalent, les sels de fluor, d'azote ou de bore.

Selon un autre exemple de réalisation de l'invention le pigment est constitué d'un noyau de phosphure métallique tel que le phosphure de nickel ou de fer enrobé par un métal choisi dans la famille comportant le plomb ou le cuivre métallique, l'enrobage ayant été traité par un réactif chimique choisi dans la famille comportant les sels de chrome hexavalent ou un produit issu de la réaction entre l'aminotriazole et l'anhydride de l'acide hydrocarbil succinique.

L'invention concerne encore un procédé de préparation d'un pigment composite, tel que décrit et spécifié précédemment et dans lequel les particules constituant le noyau sont soumises à un enrobage, par diffusion ionique, d'un métal anodique, notamment par broyage mécanique de façon à réaliser le dépôt d'une couche de métal anodique à la surface des particules du matériau constituant le noyau, et le procédé de préparation est caractérisé en outre en ce que les particules pigmentaires ainsi obentues après ce traitement mécanique et obtention d'un pigment composite constitué d'un noyau et d'une surface d'enrobage, sont soumis à un traitement par un réactif chimique en phase humide pour obtenir la passivation de la surface d'enrobage rendue ainsi émettrice d'électrons.

Plus particulièrement et selon un développement du procédé selon la présente invention, le pigment composite est traité par un réactif choisi dans la famille comportant les sels de chrome hexavalents, les sels de fluor, d'azote ou de bore.

Plus particulièrement, le pigment selon l'invention est traité par immersion dans un bain choisi dans la famille comportant à titre de produit actif :
-des sels de chrome hexavalent à une concentration comprise entre 0,5 et 15% ;
-de l'acide fluorydrique à une concentration comprise entre 0,5 et 40% ;
-du fluorure de silicium à une concentration comprise entre 0,1 à 25%.

Selon un développement du procédé selon la présente invention, le pigment composite comportant un enrobage de plomb ou cuivre métal et traité dans un bain contenant à titre de produits actifs un composé choisi dans la famille comportant : 3-amino - 1 H-1,2,4 triazole, 4-amino 1,2,4 triazole ou 5-amino -1H - 1,2,4 triazole.

Selon encore un autre développement de l'invention les pigments ainsi obtenus sont mélangés dans un liant interstitiel comportant des résines époxy, vinyl, alkyde, polyuréthane, acrylique et autres matériaux filmogènes.

D'autres caractéristiques et avantages de l'invention ressortiront de la description qui suit et qui est donnée en rapport avec une forme de réalisation plus particulière présentée à titre d'exemple.

Selon une forme de réalisation de l'invention, on réalise un pigment composite conformément aux données précédentes et à partir des proportions suivantes en poids.

POUDRE DE ZINC : 25%

PHOSPHURE DE FER OU ALLIAGE DE FER : 75%

On choisit notamment des particules de poudre de zinc qui peuvent être de granulométrie comprise entre 25 et 100 microns tandis que les particules de phosphure de fer peuvent avoir une taille de l'ordre de 5 à 10 microns.

Le mélange est introduit dans un ensemble de broyage comportant par exemple un tambour rotatif dans lequel sont introduits avec le mélange des billes d'acier de 5 à 20 cm de diamètre.

Le broyage est poursuivi pendant une durée de l'ordre de 2 à 3 heures jusqu'à ce que l'on obtienne un pigment composite dont les particules sont constituées d'une âme ou d'un noyau de fer comportant à leur surface une couche d'enrobage formée, par diffusion ionique, de zinc résultant du broyage des particules de zinc initialement introduites et qui au cours de l'opération ont été écrasées et qui sont venues petit à petit s'agglutiner et constituer une couche superficielle à la surface des particules de fer plus dures.

Le pigment composite ainsi obtenu et conforme aux données ci-dessus décrites, peut être alors traité par voie humide et selon un procédé chimique pour aboutir à une passivation de sa couche d'enrobage rendue ainsi émettrice d'électrons.

De ce fait l'enrobage par exemple en zinc dans le présent exemple, et renforcé dans sa fonction émettrice d'électrons va sssurer dans des conditions particulièrement efficaces la protection cathodique de la surface à protéger.

Le traitement chimique ultérieur à la phase d'enrobage est conduite par immersion du pigment dans un bain par exemple aqueux contenant des compositions telles que :
-sels de chrome hexavalent à la concentration dans le bain comprise entre 0,5 et 15% ;
-acide fluoridrique à une concentration comprise entre 0,5 et 40% ;
-fluorure de silicium à une concentration comprise entre 0,1 et 25%.

D'autres matériaux peuvent être utilisés comme noyaux.

Par exemple : phosphures de nickel ou de fer enrobés par du plomb métal ou du cuivre métal.

Lorsque l'enrobage par diffusion est terminé, les surfaces d'enrobage par le plomb ou par le cuivre sont traitées par des compositions spéciales contenant des sels $CR^{VI}$ ou avec un produit issu de la réaction entre l'aminotriazole et l'anhydride de l'acide hydrocarbyl succinique.

Les aminotriazoles qui peuvent être employés pour le pigment enrobé de cuivre, sont :

3 - amino - 1 H -1,2,4 triazole, 4 - amino 1,2,4 triazole ou 5 - amino - 1 H - 1,2,4 triazole.

Les pigments ainsi obtenus seront empolyés dans des liants du type époxy, vinyl, alkyde, polyuréthane, acrylique et autres matériaux filmogènes.

Les primaires ainsi obtenus auront une action anodique pour tous les aciers corrodibles et en conséquence auront une action protectrice contre la corrosion électrochimique.

Tous ces pigments peuvent être utilisés dans des primaires anti-corrosion à hautes performances et exempts de la toxicité des chromates.

## Revendications

1 - Pigment pour la protection de surfaces métalliques contre la corrosion et apte à être incorporé dans un liant tel qu'à base d'une résine synthétique ou naturelle, pour être appliqué en film à la surface de la paroi métallique à protéger, et le pigment est constitué par des particules comportant chacune un noyau choisi parmi les composés électriquement conducteurs notamment les métaux, leurs sels ou leurs alliages, tels que le carbure, phosphure, nitrure, borure, siliciure, ou alliage de métaux tels que le fer, cobalt, nickel, molybdène, titane, chrome, zirconium, vanadium, tungstène, throium, tantale, cadmium, le noyau étant revêtu d'une couch d'enrobage constituée d'un métal anodique tel que le zinc, caractérisé en ce que ladite couche d'enrobage a subi un traitement de passivation par immersion dans un réactif chimique en phase liquide, et tel que ladite couche d'enrobage devient émettrice d'électrons.

2 - Pigment selon la revendication 1, caratérisé en ce que le noyau des particles de pigment a reçu une couche d'enrobage superficielle de métaux choisis dans la famille comportant le magnésium, l'aluminium, le zinc, le chrome, le plomb, le cuivre ou l'argent, réalisant une chouche d'enrobage interpénétrant, par diffusion ionique, avec la surface du noyau.

3 - Pigment selon l'une des revendications 1 ou 2, caractérisé en ce que le réactif utilisée pour le traitement des particules pigmentaires est choisi dans la famille comportant des sels de chrome hexavalent.

4 - Pigment selon l'une des revendications 1,2 ou 3, caractérisé en ce que les réactifs chimiques en vue du traitement de la surface d'enrobage des particules pigmentaires sont choisis dans la famille comportant les sels de fluor, d'azote ou de bore.

5 - Pigment selon l'une des revendications 1 à 4, caractérisé en ce que chaque particule comport un noyau de plomb métallique finement broyé, de granulométrie comprise entre 1 et 50 microns, et enrobé par le zinc, le pigment ainsi réalisé ayant été traité par un réactif chimique choisi dans la famille comportant les sels de chrome hexavalent, les sels de fluor, d'azote ou de bore.

6 - Pigment selon l'une des revendications 1 à 4, caractérisé en ce que chaque particule de pigment est constituée d'un noyau de phosphure métallique tel que le phosphure de nickel ou de fer enrobé par un métal choisi dans la famille comportant le plomb ou le cuivre métallique, l'enrobage ayant été traité par un réactif chimique choisi dans la famille comportant les sels de chrome hexavalent ou un produit issu de la réaction entre l'aminotriazole et l'anhydride de l'acide hydrocarbil succinique.

7 - Procédé de préparation d'un pigment composite conforme à l'une des caractéristiques 1 à 6 ci-dessus et dans lequel les particles constituant le noyau sont soumises à un enrobage, par diffusion ionique, d'un métal anodique, notamment par broyage mécanique de façon à réaliser le dépôt d'une couche de métal anodique à la surface des particules du matériau constituant le noyau, caractérisé en outre en ce que les particules pigmentaires ainsi obentues après ce traitement mécanique et obtention d'un pigment composite constitué d'un noyau et d'une surface d'enrobage, sont soumis à un traitement par un réactif chimique en phase humide pour obtenir la passivation de la surface d'enrobage rendue ainsi émettrice d'électrons.

8 - Procédé selon la revendication 8, caractérisé en ce que les particules du pigment composite sont traitées par un réactif choisi dans la famille comportant les sels de chroms hexavalents, les sels de fluor, d'azote ou de bore.

9 - Procédé selon l'une des revendications 7 ou 8, caractérisé en ce que le pigment selon l'invention est traité par immersion dans un bain comportant en solution un produit actif choisi dans la famille comportant:
-des sels de chrome hexavalent à une concentration comprise entre 0,5 et 15% ;
-de l'acide fluorydrique à une concentration comprise entre 0,5 et 40% ;
-du fluorure de silicium à une concentration comprise entre 0,1 à 25%.

10. Procédé selon la revendication 7, caractérisé en ce que le pigment composite comportant un enrobage de plomb ou cuivre métal est traité dans un bain contenant à titre de produits actifs un composé choisi dans la famille comportant : 3-amino - 1 H-1,2,4-triazole, 4-amino 1,2,4 triazole ou 5-amino -1 H -1,2,4-triazole.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 565 237  (BARREM et al.)<br>* En entier *<br>--- | 1 | C 09 D   5/10<br>C 23 F   13/02 |
| A | DE-A-2 460 546  (DAI NIPPON)<br>* Revendications *<br>--- | 1 | |
| A | FR-A-2 014 936  (HOOKER)<br>* Revendication 1 *<br>----- | | |

DOMAINES TECHNIQUES
RECHERCHES (Int. Cl.4)

C 09 D
C 23 F

Le présent rapport a été établi pour toutes les revendications

| Lieu de la recherche | Date d'achèvement de la recherche | Examinateur |
|---|---|---|
| LA HAYE | 09-02-1988 | DE ROECK R.G. |